# EUROPEAN PATENT APPLICATION

(11) **EP 0 777 384 A2**
(43) Date of publication of application: **04.06.1997**
(21) Application number: 96308447.0
(22) Date of filing: 21.11.1996
(51) Int. Cl.: H04N 7/15

(54) **Video conferencing**

(30) Priority: 28.11.1995 GB 9524234
(71) Applicant: GPT LIMITED, Coventry, CV3 1HJ (GB)
(72) Inventor: Campbell, David Vernon, Slough, Berkshire SL1 5QY (GB)
(74) Representative: Branfield, Henry Anthony

(57) **Abstract**

In an image transmission system, such as in video-conferencing or video-telephony, in which information in the form of visual prompting is displayed to a first user in a one-to-one (point-to-point) or one-to-many (multi-point) presentation, the information is displayed as a semi-transparent overlay onto the normal video display of the first user.

## Description

The present invention relates generally to the display of visual prompts to one participant in a video-conference or video-telephony scenario.

In a video-conference there are a plurality of participants, the participants being at two or more separate locations which are linked by a telecommunications network. At each location there are a video camera and a display unit, the telecommunications system connecting sound and vision signals from the video-camera at each location to the display monitor or monitors at the other location or locations.

Video-conferencing or video-telephony are services described in various International Telecommunication Union (ITU) recommendations.

Some video-conferencing, video-telephony or multimedia equipment is used to provide formal presentations. This may be of the form of a lecture (e.g. in a distance learning application where a teacher, lecturer or similar person may be delivering a lecture to one or more other locations), or may be in the form of a scripted presentation from one company to another (e.g. a sales presentation) or may be in the form of a speech (e.g. a statement to employees by a manager).

Other such equipment may be used to provide a two way liaison process, where one party is acting as an "expert", a presenter of information and/or assistance conveyed by the screen overlay to the other party or parties. This may be in the form of a consultation of an expert e.g. an insurance sales-person where a number of questions must be put to the other party and the response obtained and recorded, or it may be a doctor, for example in a remote medical consultation, where the doctor may wish to view (and possibly update) patient records. It could also be an "expert" acting as a presenter of information conveyed by the screen overlay from one or many unseen experts, for example, in an interactive question and answer session.

According to the present invention there is provided an image transmission system in which information in the form of visual prompting is displayed to a first user in a one-to-one (point-to-point) or one-to-many (multi-point) presentation, the information being displayed as a semi-transparent overlay onto the normal video display of the first user.

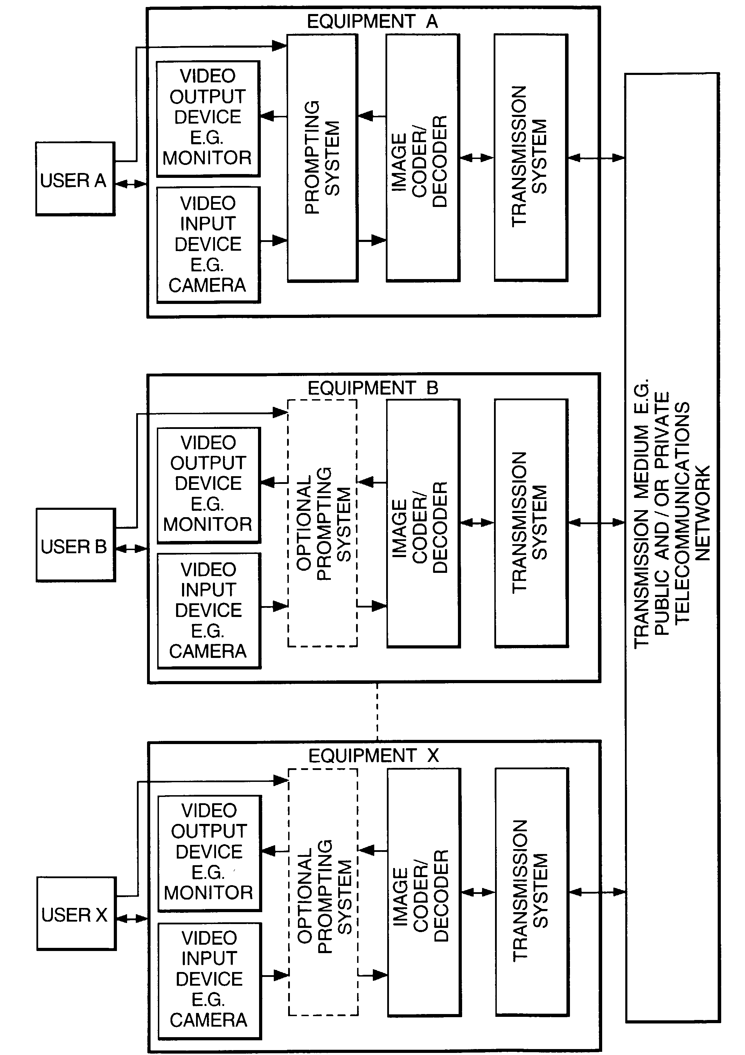

The features and advantages of the present invention will now be described with reference to the accompanying single figure in which the equipment is shown in its configuration for use.

The present invention uses the fact that a video-conferencing or video-telephony or multimedia terminal consists of both a camera and a monitor. Information can be displayed on the monitor of one user but that information is unseen by other, remote users, the information being in the form of visual prompts which are displayed as a semi-transparent overlay on the video output device of the first user.

The foregoing and additional objectives are achieved in accordance with the present invention by displaying text or other visual prompts on the screen of the first user. The first user is able to see this prompt, but by using the techniques available in video-conferencing and video-telephony equipment, this is unseen by other parties to the conference. The first user is thus able to provide a presentation or consultation with the assistance of the provided visual prompts.

There must be at least one set of equipment with the prompting system (equipment A) and one other set of equipment, which does not require a prompting system (equipment B). If equipment B is fitted with prompting equipment, its use would not be necessary for prompting to be used by equipment A. Further equipment(s) (e.g. equipment X) may be connected in a multi-point environment and would behave in the same manner as equipment B.

Each set of equipment (A, B etc.) contains a video input section (e.g. a camera), a video output section (e.g. a monitor) and an image coder/decoder section and transmission section. Equipment A additionally contains the prompting system.

The prompting system takes the user inputs (control and data) and provides the prompting display to the video output device. Additionally it may provide a different video output to the image coder/decoder section and hence the transmission section for transmission to equipment B etc.

Transmission between the equipments is by means of a telecommunications network (which may be private and/or public). In the case of a multi-point conference or presentation, this telecommunications network equipment would contain a Multi-point Control Unit (MCU).

User A is the first user and all users are interconnected by a telecommunications system.

Equipment B (and all others) may be identical to equipment A (including the prompting system), but normally only one prompting system would be used at any time. It is only necessary for equipment A to contain the presentation equipment. The use of visual prompting from equipment B (or any of the "second" users becoming a first user of their local facility) is not dependent upon the visual prompting from equipment A.

This facility provides for the first user to be prompted by a pre-determined script or a predetermined set of questions or by a set of records.

The video output device of all users, other than the first user, will see either the presentation from the first user which may be a live image of the first user, or may be pre-recorded material or may be a slide presentation, whether from visual slides (e.g. 35m slides) or computer generated.

The first user will see visual prompts overlaid semi-transparently on the image from one or many of the other users (e.g. user B).

These prompts may be scrolled across, up or down the display, or may be updated in a paged manner. The updating of the on-screen prompts may be done manually, or after a pre-determined time interval, or by voice activation.

The prompting system may also link into the image coder/decoder section and hence the transmission system in order to provide images for display to the other users (e.g. User B). This image will differ from that provided to the first user (e.g. a slide may be displayed to user B whilst an accompanying script is shown on the monitor of equipment A to the first user.)

The incoming video may be recorded with or without the visual prompts. The recording can be activated manually, automatically or by voice activation.

The script can be scrolled across, up or down the monitor or paged locally, enabling the first user to appear to maintain eye contact with the audience while reading the script or consulting the notes/records. The scrolling or paging can be either voice activated, manually activated or timed.

## Claims

1. An image transmission system in which information in the form of visual prompting is displayed to a first user in a one-to-one (point-to-point) or one-to-many (multi-point) presentation, the information being displayed as a semi-transparent overlay onto the normal video display of the first user.

2. An image transmission system in accordance with Claim 1 in which the information is scrolled across the display of the first user.

3. An image transmission system in accordance with Claim 1 in which the information is scrolled up or down on the display of the first user.

4. An image transmission system in accordance with Claim 1 in which the information is paged on the display of the first user.

5. An image transmission system in accordance with any one of Claims 1 to 4 in which the information is updated after a pre-determined time interval.

6. An image transmission system in accordance with any one of Claims 1 to 4 in which the information is updated in response to a manual activation signal.

7. An image transmission system in accordance with any one of Claims 1 to 4 in which the information is updated in response to voice activation.

8. An image transmission system in accordance with any preceding claim in which the information received and transmitted by the equipment containing the prompting system may be recorded with or without the visual prompts.

9. An image transmission system in accordance with any preceding claim where the prompting system may also link into the video processing and transmission system and which may provide images for display to the remote users and images for display to the first user where the two sets of information may be different.

10. An image transmission system in accordance with any preceding claim where the incoming video may be recorded with or without the visual prompts, the recording being activated manually, automatically or by voice.
